# EUROPEAN PATENT SPECIFICATION

(11) **EP 2 930 383 B1**
(45) Date of publication and mention of the grant of the patent: **22.11.2017**
(21) Application number: 13860706.4
(22) Date of filing: 02.12.2013
(51) Int. Cl.: F16C 29/06, F16C 29/08

(54) **SIDE SEAL FOR LINEAR GUIDE AND LINEAR GUIDE**
SEITENABDICHTUNG FÜR EINE LINEARFÜHRUNG UND LINEARFÜHRUNG
JOINT D'ÉTANCHÉITÉ LATÉRAL POUR GUIDE LINÉAIRE ET GUIDE LINÉAIRE

(30) Priority: 04.12.2012 JP 2012265505
(43) Date of publication of application: 14.10.2015
(73) Proprietor: NSK Ltd., Tokyo 141-8560 (JP)
(72) Inventor: MATSUMOTO, Jun, Fujisawa-shi Kanagawa 252-0811 (JP)
(74) Representative: Klingseisen, Franz
(86) International application number: PCT/JP2013/007060
(87) International publication number: WO 2014/087631

(56) References cited:
- WO-A1-2011/118115
- WO-A1-2011/118115
- WO-A1-2012/023239
- WO-A1-2012/066729
- JP-A- 2008 121 833
- US-A1- 2002 154 838

## Description

### Technical Field

The present invention relates to a side seal fixed to both ends in a motion direction of a slider that constitutes a linear guide.

### Background Art

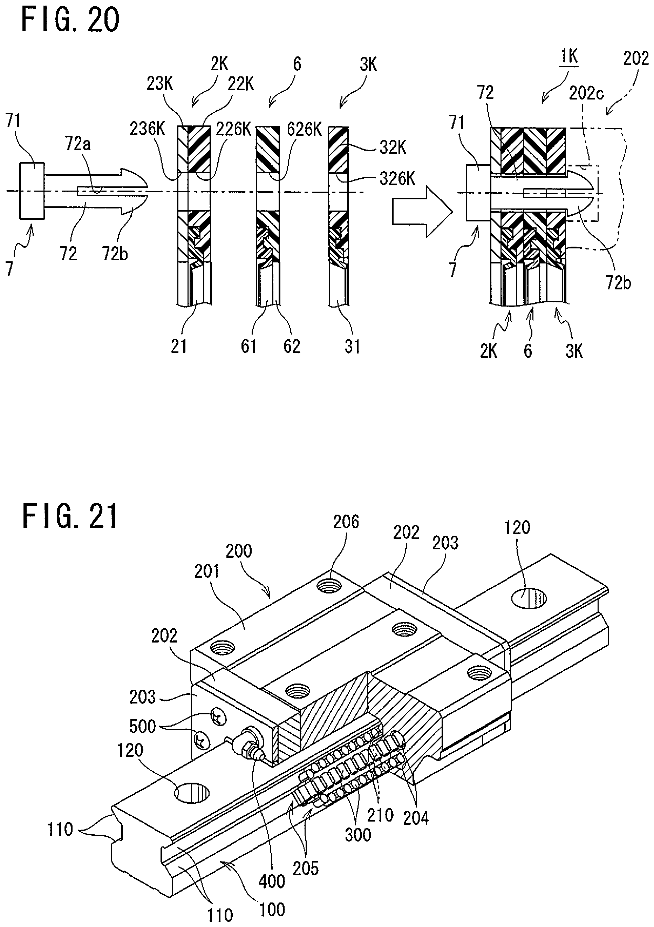

An example of a linear guide in the related art is illustrated in FIG. 21. This linear guide is equipped with a guide rail 100, a slider (referred to as a "bearing") 200, and a plurality of rollers (rolling elements) 300. The guide rail 100 and the slider 200 have rolling contact surfaces 110 and 210 that are arranged to face each other and form rolling passages for the rollers 300.

The slider 200 is divided into a slider body 201, end caps 202 fixed to both ends of the slider body, and side seals 203 fixed to both the ends, in a length direction of the guide rail 100. The rolling contact surface 210 is formed on the slider body 201. The side seals 203 arranged at both ends in the direction of linear motion of the slider 200 seal the portion between the slider 200 and the upper surface and both side surfaces of the guide rail 100 by a lip portion.

Additionally, the slider 200 has the return passage 204 for the rollers 300, and direction change paths 205 that allow the return passages 204 to communicate with the rolling passages. The return passages 204 are formed in the slider body 201, and the direction change paths 205 are formed in the end cap 202. Internal threads 206 for attaching a table or the like by screwing are formed in the upper surface of the slider 200.

Attachment holes for a grease nipple 400 are formed in the side seal 203 and the end cap 202. Lubricant is introduced into an oil passage of the end cap 202 from the grease nipple 400, and lubrication of the linear guide is performed. The side seal 203 and the end cap 202 are fixed to the slider body 201 with bolts 500. Attachment holes 120 for attaching the guide rail 100 to attachment portions, such as a base, with bolts are formed in the guide rail 100.

In this linear guide, circulation paths for the rolling elements are constituted of the rolling passages, the return passages, and the direction change paths, and as the rollers 300 circulate within the circulation paths, either the guide rail 100 or the slider 200 makes a linear motion relative to the other.

A related-art example of the side seal of such a linear guide includes a side seal in which a base portion of a seal member made of rubber is fixed to a metallic holding plate, which is used after the lip portion of the seal member is brought into contact with the upper surface and both the side surfaces of the guide rail. Additionally, it is suggested that side seals having a configuration including a plurality of seal members each independently having a lip portion are fixed to both ends in a motion direction of a slider (Patent Literatures 1 to 3).

The side seal of Patent Literature 1 includes a plurality of seal members, and each seal member has a seal body portion equipped with a lip portion, and reinforcing members provided on both surfaces of the seal body portion. By adopting such a configuration, the orientation of a protruding portion of the lip portion is able to be freely changed simply by turning the seal member over. Therefore, it is possible to provide the seal members in which the degree of freedom of the orientation of the lip portion when being installed in the linear guide is enhanced. The plurality of seal members have through-holes that allow attachment bolts to pass therethrough. When the linear guide is assembled, the side seals are fixed to both ends of the motion direction of the slider by overlapping the plurality of seal members to align the through-holes, and screwing the tips of the attachment bolts which pass through the through-holes to the slider.

A side seal of Patent Literature 2 has two covers including an upper member and both side members that face an upper surface and both side surfaces of a guide rail with a gap therefrom, two seal members that bring lip portions into contact with the upper surface and both the side surfaces of the guide rail, and a holding plate that holds base portions of the two seal members on its respective surfaces in a thickness direction and is sandwiched between the two covers. The two seal members have opposite orientations in which the lip portions are inclined away from each other (orientations of the cover sides adjacent to the seal members, respectively), and also have different materials.

According to the side seal of Patent Literature 2, since the two seal members have the opposite orientations in which the lip portions thereof are inclined away from each other (orientations of the cover sides adjacent to the seal members, respectively), both seal performance and dust-preventing performance are excellent. Additionally, since the materials of the two seal members are different from each other, a seal frictional force is able to be reduced by appropriately selecting the materials of the respective seal members. The covers and the holding plate have through-holes that allow attachment bolts to pass therethrough. When the linear guide is assembled, the side seals are fixed to both ends of the motion direction of the slider by screwing the tips of the attachment bolts which pass through the through-holes of the covers and the holding plate to the slider.

A side seal of Patent Literature 3 is configured by a plurality of seal members, a plurality of holding plates holding the seal members, and a plurality of covers (scrapers) being combined. A plurality of types of seal members that are different from each other in at least any one of the inclination, material, thickness, and tip shape of lip portions are prepared as the seal members. A plurality of suitable seal members are selected from these seal members, and a side seal is assembled by combining the same number of the covers and the holding plates. Accordingly, the sealing performance exhibited by the side seal is able to be improved by changing the seal function of the side seal for a linear guide according to application. A method of fixing the side seals to both ends in the motion direction of the slider is not disclosed in Patent Literature 3.

A side seal of Patent Literature 4 is constituted of a holder case equipped with a sheathing portion and an end surface portion, a plate-like seal plate disposed in a housing portion of the holder case, and a sealing plate disposed in an opening portion of an end portion of the sheathing portion. The seal plate has a three-layer structure having skin layers on both side surfaces of a sponge layer, and lubricant is impregnated in a porous portion of the sponge layer. The seal plate and the sealing plate are arranged in the holder case in a state where the positions thereof in a direction perpendicular to the direction of linear motion are determined by the engagement between locating pins and pin holes

Since the side seal of Patent Literature 4 does not have a retainer of the seal plate in the direction of linear motion, there is a possibility that the side seal may come off the holder case during conveyance or when being attached to the slider. That is, the side seal is not able to be handled as one part.

Further side seals for a linear guide device are, for example, disclosed in JP 2008 121833 A and WO 2012/023239 A1, in which a guide rail, a slider and a plurality of rolling elements are provided, and in which a lip portion of the side seal components is provided.

### Citation List

### Patent Literatures

PTL 1: Pamphlet of International Publication No. WO2012-066729
PTL 2: Japanese Patent Application Laid-Open No. 2012-112398
PTL 3: Pamphlet of International Publication No. WO2012-070185
PTL 4: Japanese Patent Application Laid-Open No. 2007-255498

### Summary of Invention

### Technical Problem

Since each of the side seals described in PTLs 1 to 4 is not able to be handled as one part, there are problems in that attachment of each side seal to the slider is troublesome and the positions of the respective seal members are not able to be independently adjusted.

For example, if the attachment positions of the respective seal members are not able to be independently adjusted when a side seal attachment surface of the slider is inclined, the seal members to the slider are attached in a state where all the seal members are inclined and it is not possible to bring the lip portions of the respective seal members into contact with the guide rail with respective suitable pressing force. Along with this, there is a possibility that the intended sealing performance by the respective seal members is not able to be exhibited.

An object of the invention is to provide a side seal in which attachment to a slider is simple and the positions of the respective seal members are able to be independently adjusted, in the side seal that is used after being fixed to both ends in a direction of a linear motion of a slider that constitutes a linear guide, that seals between the slider and an upper surface and both side surfaces of the guide rail by a lip portion, and that has a plurality of seal members each having the lip portion independently.

### Solution to Problem

This problem is solved by means of a side seal according to claim 1, as well as by means of a linear guide according to claims 7 and 8 Preferred embodiments of the invention are included in the dependent claims.

In order to solve the above problems, there is provided a side seal for a linear guide of an aspect of the invention.. The linear guide includes a guide rail, a slider, and a plurality of rolling elements. The side seal is fixed to both ends of a linear guide having the following configuration (1) in a direction of linear motion of the slider. The side seal seals a portion between the slider and an upper surface and both side surfaces of the guide rail by a lip portion. The side seal is characterized by having the following configuration (2).
(1) The guide rail and the slider have rolling contact surfaces that are arranged to face each other and form rolling passages for the rolling elements, and either the guide rail or the slider makes a linear motion relative to the other as the rolling elements roll in the rolling passages.
(2) The side seal includes a plurality of seal members each having the lip portion independently, and the plurality of seal members are coupled together so as to be relatively movable in a direction perpendicular to the direction of linear motion.

According to the side seal of this aspect, since the plurality of seal members are coupled together and is able to be handled as one part, attachment of the side seal to the slider is simple as compared to a side seal that is not able to be handled as one part. Additionally, since the plurality of seal members are relatively movable in the direction perpendicular to the direction of linear motion, the positions of the respective seal members in the direction perpendicular to the direction of linear motion are able to be independently adjusted. Accordingly, since the lip portions of the plurality of seal members are able to be brought into contact with the guide rail with respective suitable pressing force, intended sealing performance obtained by each seal member is able to be exhibited. The plurality of seal members that constitute the side seal are also coupled together so as to be relatively movable in the direction of linear motion, the relative movement in the direction perpendicular to the direction of linear motion is able to be easily performed as compared to a case where the relative movement in the direction of linear motion is not able to be performed.

The side seal of this aspect is able to have the following configuration (3)
(3) The plurality of seal members are coupled together by a convex portion and a concave portion that are engaged with each other, and the convex portion and the concave portion are formed integrally with the respective seal members.
   When the side seal of this aspect has the above configuration (3), the side seal is able to have the following configuration (4) not forming part of the current invention or configuration (5).
(4) The convex portion is a projection that is formed on a plate surface of the seal member and that protrudes in the direction of linear motion, and the concave portion is a hole into which the projection is inserted.
   When the above configuration (4) is included, it is preferable that the projection is not exposed from the seal member arranged on the outermost side.
(5) The concave portion is a cutout portion that is formed at an edge portion of the seal members, and the convex portion is a protruding piece that protrudes in the direction of linear motion and is engaged with the cutout portion.
   The side seal of this aspect is able to have the following configuration (6).
(6) The side seal further includes a coupling part that is separated from the plurality of seal members, and the plurality of seal members have an engaged portion that is engaged with the coupling part.
   When the side seal of this aspect has the above configuration (6),
   The side seal is able to have the following configuration (7) or configuration (8).
(7) The coupling part is a pin and the engaged portion is a through-hole.
(8) The engaged portion is a cutout portion that is formed at an edge portion of the seal member, and the coupling part has a protruding piece that protrudes in the direction of linear motion and is engaged with the cutout portion.

When the side seal of this aspect has the above configuration (6) and (7), and the tip of the pin has a protruding portion that protrudes from the surface of the side seal on the slider side, it is necessary to provide a concave portion for arranging the protruding portion in the end cap.

### Advantageous Effects of the Invention

According to the side seal for a linear guide of the invention, the attachment of the side seal to the slider is simpler than the side seals of PTLs 1 to 4, and the positions of the respective members in the direction perpendicular to the direction of linear motion are able to be independently adjusted

### Brief Description of the Drawings

FIG. 1 is a view illustrating a side seal of a first embodiment not forming part of the current invention, and a method for attaching the side seal to a slider;
FIG. 2 is a perspective view illustrating a state where the side seal of the first embodiment is separated into an outer seal and an inner seal;
FIG. 3 is a perspective view illustrating a seal section, a holding plate, and a cover that are components of the outer seal of FIG. 2;
FIG. 4 is a front view (view illustrating a surface arranged on the holding plate side) of the seal section of FIG. 3;
Fig. 5 is an A-A cross-sectional view of Fig. 4;
FIG. 6 is an A-A cross-sectional view of the holding plate of FIG. 3 ;
FIG. 7 is a perspective view illustrating a seal section and a holding plate that are components of the inner seal of FIG. 2 ;
FIG. 8 is an A-A cross-sectional view of the seal section of FIG. 7;
FIGS. 9A to 9C are an A-A cross-sectional view of the outer seal of FIG 2, an A-A cross-sectional view of the inner seal of FIG. 2, and a cross-sectional view, at the same position, of the side seal in which the inner and outer seals are coupled together respectively;
FIGS. 10A to 10C axe a B-B cross-sectional view of the outer seal of FIG.. 2, a B-B cross-sectional view of the inner seal of FIG.. 2, and a cross-sectional view, at the same position, of the side seal in which the inner and outer seals are coupled together respectively;
FIGS. 11A and 11B are views illustrating the effects of the side seal of the first embodiment;
FIG. 12 is a view illustrating an example in which the coupling structure of the outer seal and the inner seal in an upper portion is different from that of FIGS. 9;
FIGS. 13A to 13C are views illustrating an example in which the coupling structure of the cover and the holding plate that constitute the outer seal is different from that of FIG. 10A;
FIGS. 14A to 14C are views illustrating a side seal equipped with an outer seal 2B of FIG.. 13C. FIG. 14A illustrates a cross-sectional view at a position of the outer seal 2B different from that of FIG. 13C, FIG. 14B illustrates a cross-sectional view of an inner seal at the same position as that of FIG. 14A, and FIG.. 14C illustrates a cross-sectional view of the side seal in which the inner and outer seals are coupled together, at the same position as that of FIG.14A;
FIG. 15 is a perspective view illustrating a state where a side seal of a second embodiment is separated into an outer seal and an inner seal;
FIGS.. 16A to 16C are an A-A cross-sectional view of the outer seal of FIG. 15, an A-A cross-sectional view of the inner seal of FIG.. 15, and a cross-sectional view, at the same position, of the side seal in which the inner and outer seals are coupled together respectively;
FIG. 17 is a perspective view illustrating a state where a side seal of a third embodiment not forming part of the current invention is separated into a cover, an outer seal, and an inner seal;
FIG. 18A to 18C are cross-sectional views of members that constitute the side seal of FIG. 17 and FIG. 18D is a cross-sectional view of the side seal. FIG. 18B is the cross-sectional view of the outer seal and FIG. 18C is the cross-sectional view of the inner seal are A-A cross-sectional views of FIG 17, and FIG. 18A is the cross-sectional view of the cover is a cross-sectional view at a position corresponding to this;
FIG. 19 is a view illustrating an example of a side seal in which an outer seal and an inner seal are coupled together by a pin;
FIG. 20 is a view illustrating an example of a side seal in which three seal members are coupled together by a split pin; and
FIG. 21 is a partially broken perspective view illustrating an example of a linear guide in the related art.

### Description of Embodiments

Hereinafter, although embodiments of the invention will be described, the invention is not limited to the embodiments but to the appended claims.

### [First Embodiment]

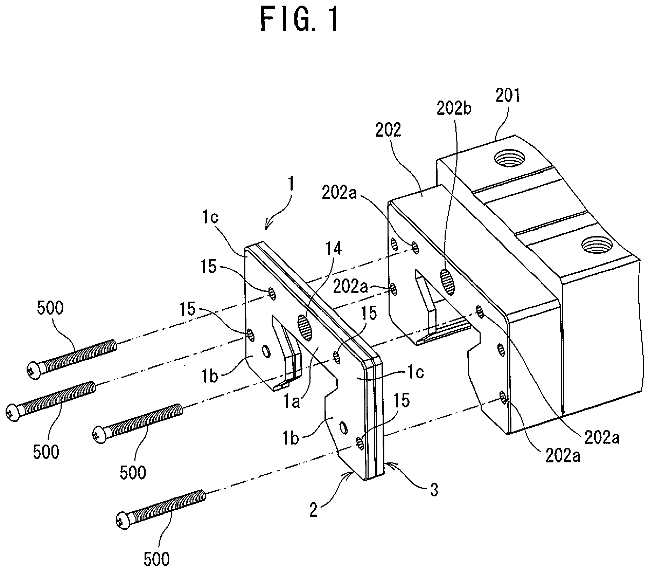

As illustrated in FIG. 1, the side seal 1 of this embodiment has substantially the same surface shape as an end cap 202, and includes an upper portion 1a that is arranged on an upper side of a guide rail, lateral portions 1b that are respectively arranged on left and right sides of the guide rail, and corner portions 1c that are arranged on oblique upper sides of the guide rail.

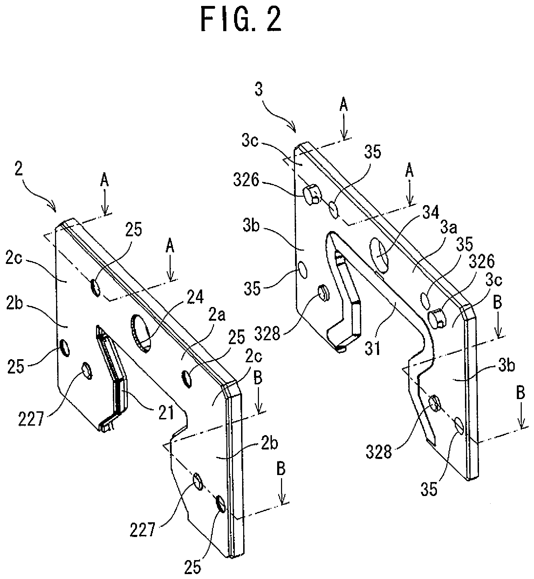

The side seal 1 is provided by two seal members of an outer seal 2 and an inner seal 3 illustrated in FIG. 2 being coupled together, and the inner seal 3 is directed to the end cap 202 side, and is fixed to a slider body 201 together with the end cap 202 with four bolts 500. The side seal 1 and the end cap 202 are formed with through-holes 15 and 202a for allowing the respective bolts 500 to pass therethrough, and attachment holes 14 and 202b for a grease nipple.

As illustrated in FIG. 2, the outer seal 2 has substantially the same surface shape as the end cap 202, and includes an upper portion 2a that is arranged on the upper side of the guide rail, lateral portions 2b that are arranged on the left and right sides of the guide rail, and corner portions 2c that are arranged on the oblique upper sides of the guide rail. The inner seal 3 has substantially the same surface shape as the end cap 202, and includes an upper portion 3a that is arranged on the upper side of the guide rail, lateral portions 3b that are arranged on the left and right sides of the guide rail, and corner portions 3c that are arranged on the oblique upper sides of the guide rail. The upper portions 2a and 3a and the lateral portions 2b and 3b of the outer seal 2 and the inner seal 3 are formed with the through-holes 25 and 35. The respective through-holes 15 of the side seal 1 are obtained by aligning the through-holes 25 and 35..

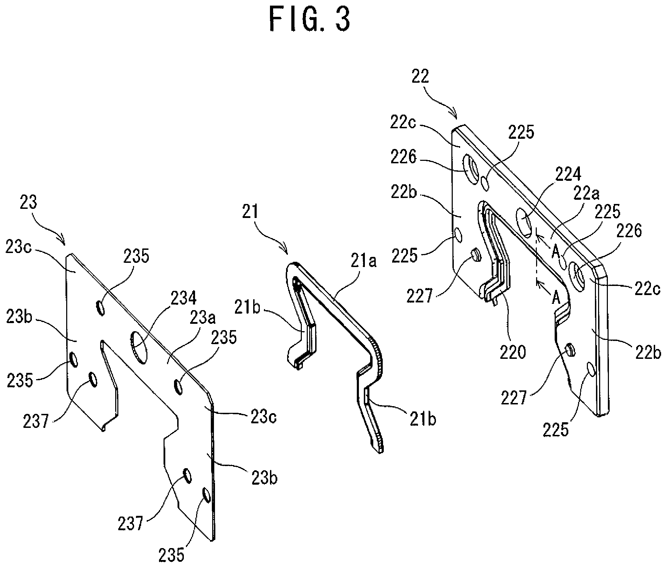

As illustrated in FIG 3, the outer seal 2 is constituted of a seal section 21, a holding plate 22, and a cover 23. The materials of the seal section 21 include polyester elastomer and the like. The materials of the holding plate 22 include polyacetal, nylon, and the like. The materials of the cover 23 include steel, aluminum, and the like.

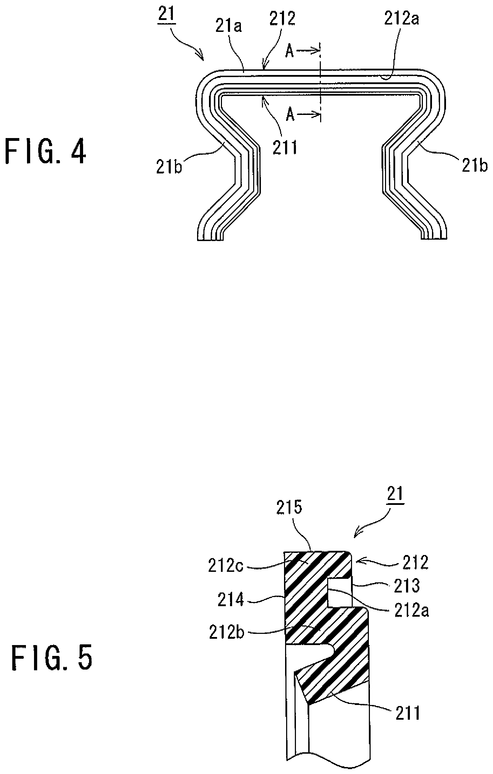

The seal section 21, as illustrated in FIG. 3, is divided into an upper seal portion 21a that is arranged on the upper side of the guide rail, and lateral seal portions 21b that are respectively arranged on the left and right sides of the guide rail. FIG 4 is a front view of the seal section 21 viewed from a surface that is not seen in FIG. 3. As illustrated in this drawing, the seal section 21 is divided into a lip portion 211 that is brought into contact with the upper surface and both the side surfaces of the guide rail, and a base portion 212 that is held by the holding plate 22, in directions in which the upper seal portion 21a and the lateral seal portions 21b face the guide rail, respectively One surface of the base portion 212 is formed with a concave portion (an engaging portion that is engaged with the holding plate 22 through fitting of irregularities) 212a.. The base portion 212 is divided into a tip portion 212b and a base end portion 212c by the concave portion 212a..

As illustrated in FIG. 5, the lip portion 211 of the seal section 21 is formed at the tip portion 212b of the base portion 212, and inclines from a first surface 213 side to a second surface 214 side in a thickness direction of the base portion 212. A third surface 215 that is an outermost surface (a side separated from the guide rail) of the seal section 21 is orthogonal to the first and second surface 213 and 214 of the base end portion 212c

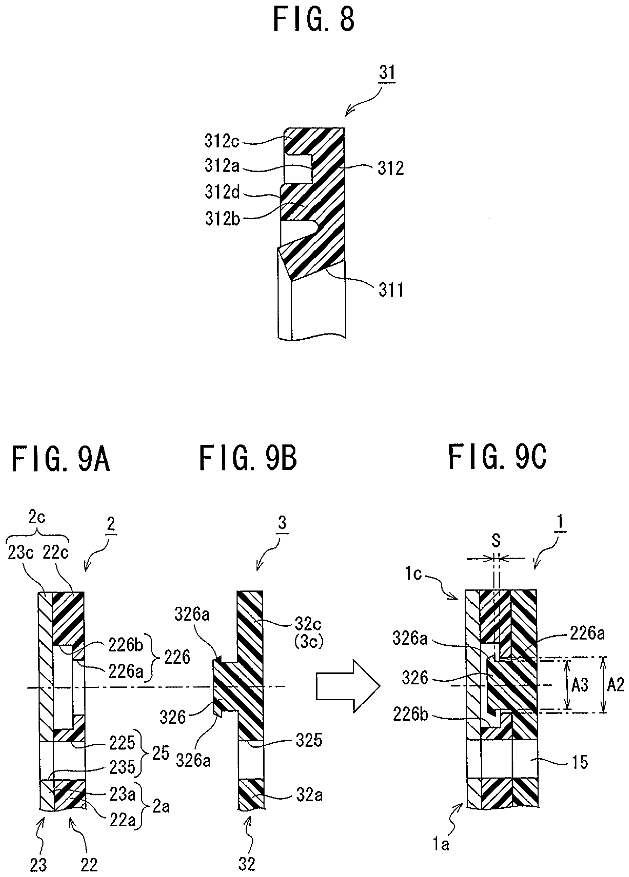

The holding plate 22, as illustrated in FIG. 3, has substantially the same surface shape as the end cap 202 (FIG. 1), and includes an upper portion 22a that is arranged on the upper side of the guide rail, lateral portions 22b that are arranged on the left and right sides of the guide rail, and corner portions 22c that are arranged on the oblique upper sides of the guide rail.. The upper portion 22a is formed with through-holes 225 for allowing the bolts 500 (FIG. 1) to pass therethrough, and a through-hole 224 to which a grease nipple is attached. The corner portion 22c is formed with a through-hole 226 for allowing a projection 326 of the inner seal 3 to be inserted thereinto. The through-hole 226, as illustrated in FIG. 9A, includes a smaller-diameter portion 226a and a larger-diameter portion 226b.

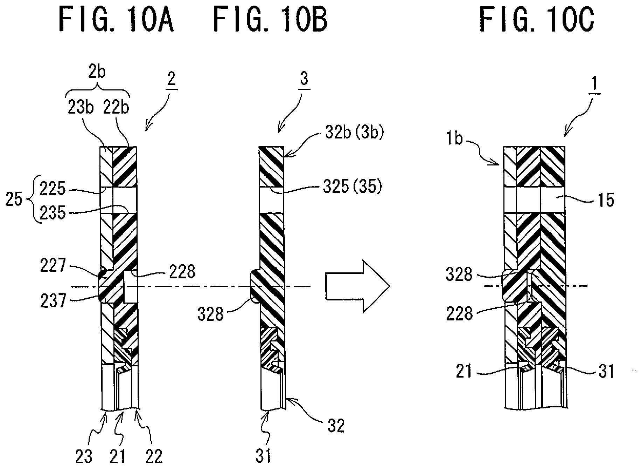

The lateral portion 22b of the holding plate 22 is formed with the through-hole 225 for allowing the bolt 500 to pass therethrough, and a projection 227 that protrudes to the cover 23 side. Additionally, as illustrated in FIG. 10A, the surface of the lateral portion 22b opposite to the projection 227 is formed with a concave portion 228 into which a projection 328 of the inner seal 3 is inserted,

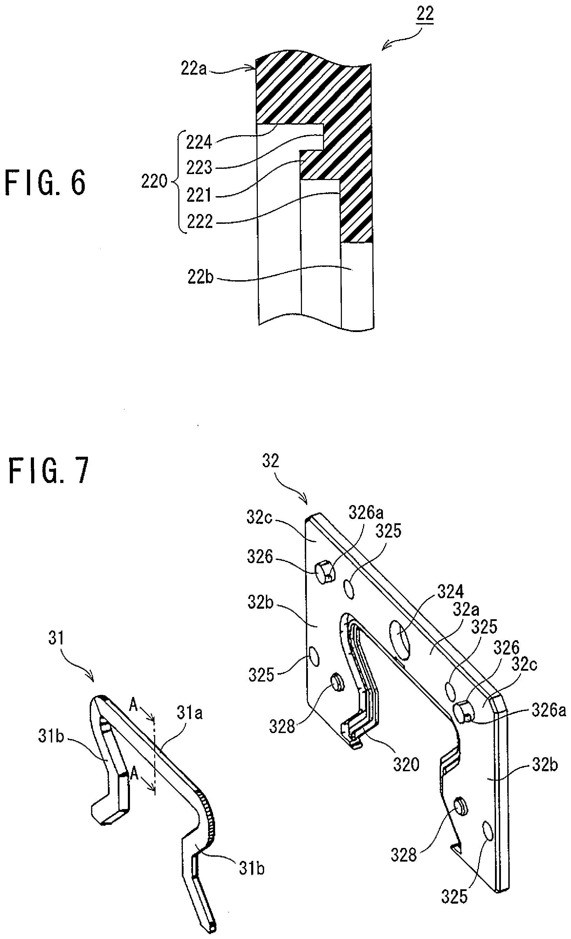

A holding portion 220 that holds the base portion 212 of the seal section 21 is formed inside the holding plate 22 (guide rail side) . The holding portion 220, as illustrated in FIG 6, includes a convex portion 221 that is fitted into the concave portion 212a of the seal section 21, a first holding surface 222 that is formed inside the convex portion 221, a second holding surface 223 that is formed outside the convex portion 221, and a third holding surface 224 that is formed outside the second holding surface 223. The first holding surface 222 and the second holding surface 223 are parallel to a plate surface of the holding plate 22, and the third holding surface 224 is orthogonal to the plate surface of the holding plate 22.

As illustrated in FIG. 3, the cover 23 has substantially the same surface shape as the end cap 202, and includes an upper portion 23a that faces the upper surface of the guide rail with a gap therefrom, lateral portions 23b that respectively face the left and right side surfaces of the guide rail with a gap therefrom, and corner portions 23c that are arranged on the oblique upper sides of the guide rail.. The upper portion 23a is formed with through-holes 235 for allowing the bolts 500 to pass therethrough, and a through-hole 234 to which a grease nipple is attached. The lateral portion 23b is formed with the through-hole 235 for allowing the bolt 500 to pass therethrough, and a through-hole 237 that allows the projection 227 of the holding plate 22 to be inserted thereinto. The diameter of the through-hole 237 is slightly (for example, 0.02 mm to 0.10 mm) smaller than the diameter of the projection 227.

The outer seal 2 is assembled by the following method.

First, the seal section 21 is held by the holding plate 22 by fitting the concave portion 212a of the base portion 212 of the seal section 21 into the convex portion 221 of the holding portion 220 of the holding plate 22. In that case, the base end portion 212c is fitted into a concave portion that is formed by the third holding surface 224, the second holding surface 223, and the surface of the convex portion 221 that faces the third holding surface 224.

Next, the cover 23 is arranged on the surface of the holding plate 22 by which the seal section 21 is held, and the projection 227 provided in the lateral portion 22b of the holding plate 22 is fitted into the through-hole 237 of the cover 23. FIG. 10A illustrates this state. The through-hole 25 of the outer seal 2 illustrated in FIG. 2 includes the through-hole 225 of the holding plate 32 illustrated in FIG 10A, and the through-hole 235 of the cover

As illustrated in FIG. 10A, since the projection 227 of the holding plate 22 is fitted into the through-hole 237 of the cover 23 by light interference fitting, the holding plate 22 and the cover 23 are coupled together in a state where there is no rattling. Accordingly, the outer seal 2 is able to be handled as one part in which the seal section 21, the holding plate 22, and the cover 23 are integrated.

As illustrated in FIG. 7, the inner seal 3 is constituted of the seal section 31 and the holding plate 32. The materials of the seal section 31 include polyester elastomer and the like. The materials of the holding plate 32 include polyacetal, nylon, and the like. The seal section 31, as illustrated in FIG. 7, is divided into an upper seal portion 31a that is arranged on the upper side of the guide rail, and lateral seal portions 31b that are respectively arranged on the left and right sides of the guide rail.

As illustrated in FIG. 8, the seal section 31 is divided into a lip portion 311 that is brought into contact with the upper surface and both the side surfaces of the guide rail, and a base portion 312 that is held by the holding plate 32, in directions in which the upper seal portion 31a and the lateral seal portions 31b face the guide rail, respectively. One surface of the base portion 312 is formed with a concave portion (an engaging portion that is engaged with the holding plate 32 through fitting of irregularities) 312a. The base portion 312 is divided into a tip portion 312b and a base end portion 312c by the concave portion 312a

As illustrated in FIG. 8, in the seal section 31 of the inner seal 3, a tip side of the lip portion 311 is directed to the holding plate 32 side. In contrast, in the outer seal 2 illustrated in FIG. 5, a tip side of the lip portion 211 of the seal section 21 is directed to a side opposite to the holding plate 22.

The holding plate 32, as illustrated in FIG. 7, has substantially the same surface shape as the end cap 202 (FIG.. 1), and includes an upper portion 32a that is arranged on the upper side of the guide rail, lateral portions 32b that are arranged on the left and right sides of the guide rail, and corner portions 32c that are arranged on the oblique upper sides of the guide rail. The upper portion 32a is formed with through-holes 325 for allowing the bolts 500 (FIG. 1) to pass therethrough, and a through-hole 324 to which a grease nipple is attached. The through-hole 35 of the inner seal 3 illustrated in FIG. 2 includes the through-hole 325 of the holding plate 32.

The corner portion 32c is formed with a columnar projection 326 that is inserted into the through-hole 226 of the outer seal 2. Hook portions 326a are formed on both sides along the diameter of a column at the tip of the columnar projection 326 in an axial direction. As illustrated in FIGS. 9, the diameter of the projection 326 is a diameter such that this convex portion is loosely fitted into the smaller-diameter portion 226a of the through-hole 226 of the outer seal 2. The diameter of the tip portion having the hook portions 326a is larger than the smaller-diameter portion 226a of the through-hole 226 of the outer seal 2 and is smaller than the larger-diameter portion 226b of the through-hole 226.

The lateral portion 32b of the holding plate 32 is formed with the through-hole 325 for allowing the bolt 500 to pass therethrough, and the projection 328 that protrudes to the outer seal 2 side. The diameter of the projection 328 is slightly smaller than the diameter of the concave portion 228 provided in the holding plate 22 of the outer seal 2, and the protrusion dimension of the projection 328 is smaller than the depth of the concave portion 228.

A holding portion 320 that holds the base portion 312 of the seal section 31 is formed inside the holding plate 32 (guide rail side). The holding portion 320 has a shape similar to the holding plate 22 of the outer seal 2 illustrated in FIG. 6, and has a convex portion that is fitted into the concave portion 312a of the seal section 31 illustrated in FIG. 8, a concave portion into which the base end portion 312c of the base portion 312 is fitted, and a holding surface that holds a surface 312d of the tip portion 312b of the base portion 312.

The side seal 1 is assembled by the following method.

First, the seal section 31 is held by the holding plate 32 by fitting the concave portion 312a of the base portion 312 of the seal section 31 into the convex portion of the holding portion 320 of the holding plate 32 of the inner seal 3. FIG. 10B illustrates this state. The outer seal 2 is assembled by the above-described method, and is brought into a state illustrated in FIGS. 9A and 10A,

Next, in the corner portions that are arranged on the oblique upper sides of the guide rail, as illustrated in FIGS. 9A to 9C, the projection 326 of the inner seal 3 is inserted into the through-hole 226 provided in the holding plate 22 of the outer seal 2. The tip of the projection 326 is arranged in the larger-diameter portion 226b after passing through the smaller-diameter portion 226a of the through-hole 226 by elastically deforming the hook portions 326a. FIG. 9C illustrates this state. In this state, gaps are present between the projection 326 and the through-hole 226, in a direction of linear motion and a direction perpendicular to the direction of linear motion.

As illustrated in FIG. 9C, a gap equivalent to a dimensional difference between the diameter A3 of the projection 326 and the diameter A2 of the smaller-diameter portion 226a of the through-hole 226 is present in the direction perpendicular to the direction of linear motion. A gap S equivalent to a difference between the protrusion dimension of the projection 326 up to before the hook portions 326a and the axial dimension of the smaller-diameter portion 226a of the through-hole 226 is present in the direction of linear motion.

In the lateral portions that are arranged on the left and right sides of the guide rail, as illustrated in FIGS.. 10, the projection 328 of the inner seal 3 is inserted into the concave portion 228 provided in the lateral portion 22b of the holding plate 22 of the outer seal 2. FIG. 10C illustrates this state. In this state, gaps are present between the projection 328 and the concave portion 228, in both the direction of linear motion and the direction perpendicular to the direction of linear motion, due to the above-described dimensional difference between both of the projection and the concave portion. It is preferable that the gap in the direction perpendicular to the direction of linear motion in the lateral portions is set to be equal to the gap in the direction perpendicular to the direction of linear motion in the upper portion.

Then, as illustrated in FIG.. 10C, the orientation of the lip portion 21 of the outer seal 2 and the orientation of the lip portion 31 of the inner seal 3 are opposite to each other Since the side seal 1 is fixed to the slider body with the inner seal 3 side being directed to the end cap, a lubricant leakage prevention function is mainly exhibited by the lip portion 31 of the inner seal 3, and a dust-preventing function is mainly exhibited by the lip portion 21 of the outer seal 2.

In this way, the side seal 1 of this embodiment has the outer seal 2 and the inner seal 3 that independently have the lip portions 21 and 31, and since the above-described gaps are present in both the direction of linear motion and the direction perpendicular to the direction of linear motion, the outer seal 2 and the inner seal 3 are coupled together so as to be relatively movable in both directions. Also, the side seal 1 of this embodiment is able to be handled as one part in which the outer seal 2 and the inner seal 3 are integrated.

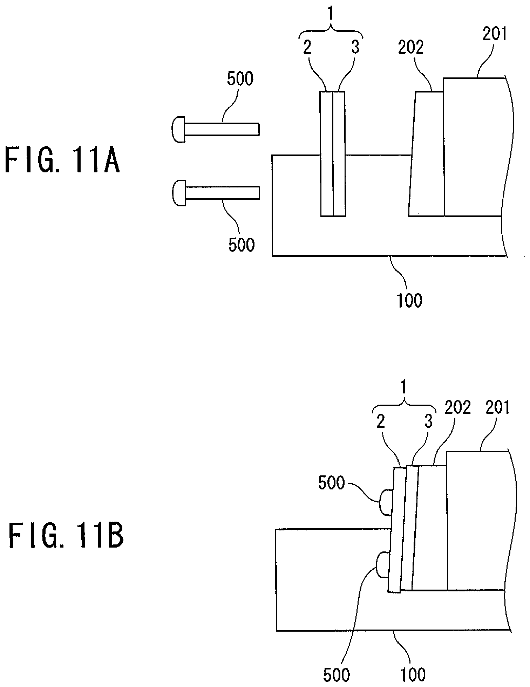

Therefore, attachment of the side seal 1 of this embodiment to the slider is simple. Additionally, the side seal 1 of this embodiment, as illustrated in FIG. 11A, is able to apply a predetermined pressing force caused by the lip portions to the guide rail 100 by moving the outer seal 2 and the inner seal 3 in the direction perpendicular to the direction of linear motion even when the end surface of the end cap 202 collapses in the direction of linear motion.

Specifically, as illustrated in FIG. 11B, a decrease in the pressing force caused by the lip portion of the outer seal 2 is able to be prevented by fixing the side seal 1 to the slider body 201 via the end cap 202 with the bolts 500 in a state where the outer seal 2 is shifted downward more than the inner seal 3.

Additionally, in the side seal 1 of this embodiment, as illustrated in FIGS. 9A to 9C, the through-hole 226 of the outer seal 2 is covered with the cover 23. Therefore, the projection 326 arranged at the through-hole 226 is not exposed from the outer seal (seal member arranged on the outermost side) 2. Accordingly, the side seal 1 is also suitable for a linear guide to be used in an environment where foreign matter is present

The side seal 1 of this embodiment is a side seal for the linear guide of one aspect of the invention, and has the above configurations (3) and (4). The projection 326 of the inner seal 3 is equivalent to the convex portion of the above configuration (3), and the through-hole 226 of the outer seal 2 is equivalent to the concave portion of the above configuration (3). Additionally, the projection 326 of the inner seal 3 is equivalent to the projection of the above configuration (4), and the through-hole 226 of the outer seal 2 is equivalent to the hole of the above configuration (4).

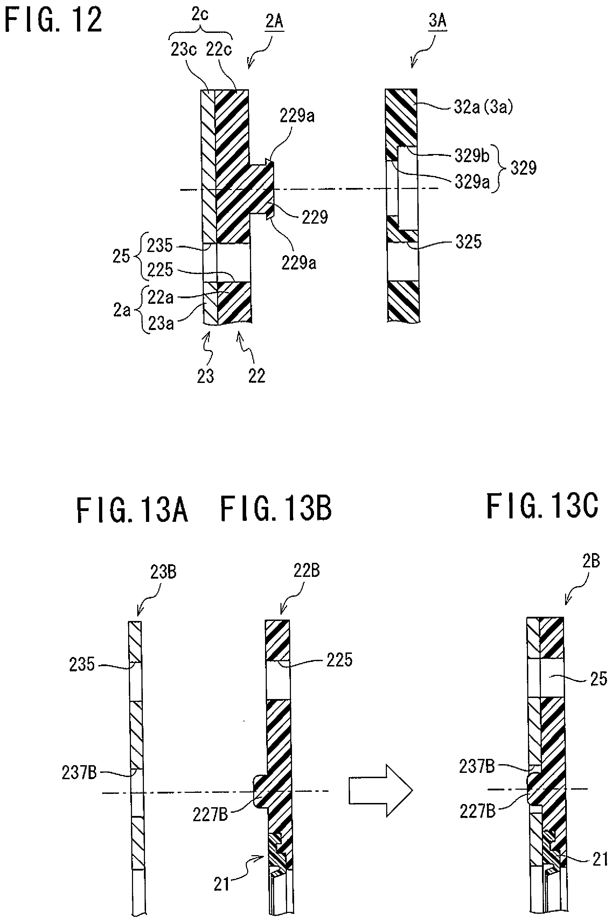

In addition, the coupling structure of the outer seal and an inner seal may also be one illustrated in FIG. 12. In the example of FIG. 12, the holding plate 22 of an outer seal 2A is provided with a projection 229 with a hook 229a, and the holding plate 32 of an inner seal 3A is provided with a through-hole 329 into which the projection 229 is inserted The through-hole 329 includes a smaller-diameter portion 329a and a larger-diameter portion 329b..

Additionally, although the outer seal 2 having the cross-sectional shape illustrated in FIG. 10A is able to be handled as one part, an outer seal that is not able to be handled as one part may be coupled with the inner seal 3, for example as in an outer seal 2B having a cross-sectional shape illustrated in FIG. 13C. In an example of FIGS. 13A to 13C, since the diameter of a through-hole 237B of a cover 23B that constitutes the outer seal 2B is larger than the diameter of a projection 227B of a holding plate 22B, it is not possible to handle only the outer seal 2B as one part..

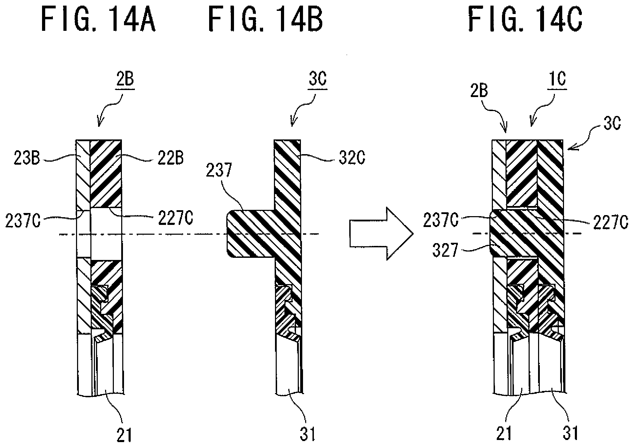

As the outer seal 2B of FIG. 13C is coupled with, for example, an inner seal 3C having a shape illustrated in FIG. 14B, a side seal 1C that is able to be handled as one part is able to be obtained. In an example of FIGS. 14A to14C, a holding plate 32C of the inner seal 3C is provided with a projection 327 of which the protrusion dimension is slightly longer than the dimension of the outer seal 2B in the direction of linear motion, and the holding plate 22B and the cover 23B of the outer seal 2B are provided with through-holes 227C and 237C into which the projection 327 is inserted. The tip of the projection 327 is roundly formed by chamfering.

The diameter of the through-hole 227C of the holding plate 22B is (for example, about 0..2 to 2.0 mm) larger than the diameter of the projection 327, and the projection 327 is loosely fitted into the through-hole 227C. The diameter of the through-hole 237C of the cover 23B is slightly (for example, about 0.02 to 0 10 mm) smaller than the diameter of the projection 327..

The projection 327 of the inner seal 3C is inserted into the through-hole 237C of the cover 23B by interference fitting after being inserted from the through-hole 227C side of the holding plate 22B of the outer seal 2B. Since the tip of the projection 327 is roundly formed, the projection 327 is able to be smoothly inserted up to the through-hole 237C of the cover 23C. Accordingly, the side seal 1C is able to be handled as one part in which the outer seal 2B and the inner seal 3C are integrated. Additionally, since a gap is present in the direction perpendicular to the direction of linear motion due to a difference between the diameter of the through-hole 227C and the diameter of the projection 327, the outer seal 22B and the inner seal 3C are coupled together so as to be relatively movable in this direction.

### [Second Embodiment]

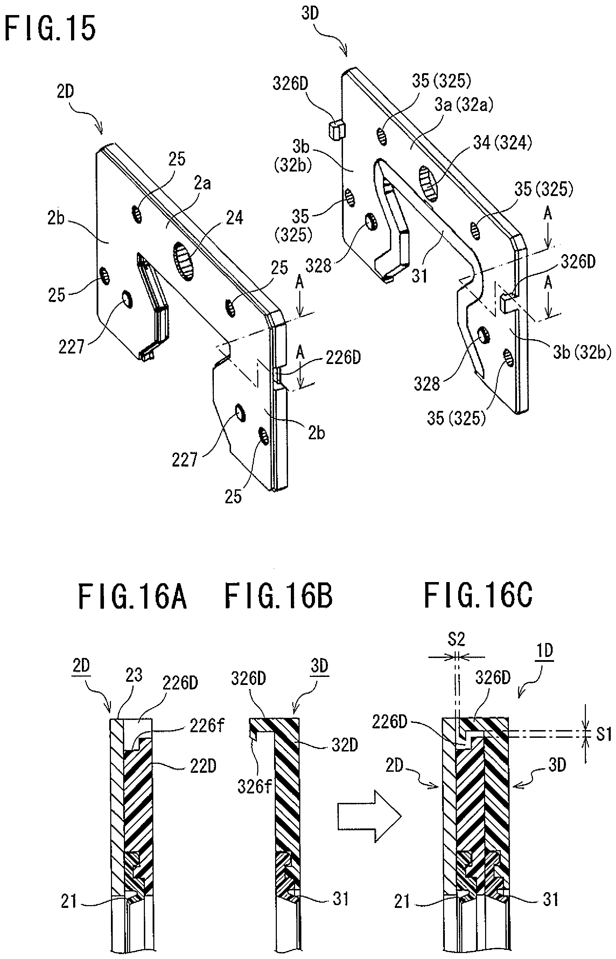

As illustrated in FIGS. 15 and 16A to 16C, a side seal 1D of this embodiment is provided by two seal members of an outer seal 2D and an inner seal 3D being coupled together. Similar to the side seal 1 of the first embodiment, the side seal 1D of this embodiment is fixed to the slider body 201 together with the end cap 202 with the four bolts 500 with the inner seal 3D being directed to the end cap 202 side (refer to FIG. 1). The through-holes 25 and 35 for that purpose are formed in the upper portions 2a and 3a and the lateral portions 2b and 3b of the outer seal 2D and the inner seal 3D.

The inner seal 3D includes the same seal section 31 as that of the first embodiment, and a holding plate 32D that is partially different from the holding plate 32 of the first embodiment. The holding plate 32D has protruding pieces 326D, instead of the columnar projections 326 of the holding plate 32 of the first embodiment. The protruding piece 326D protrudes in the direction of linear motion from an edge portion of the lateral portion 32b of the holding plate 32D, and the tip thereof is formed with a hook portion 326f that is bent inward in the orientation orthogonal to the direction of linear motion. The through-hole 35 of the inner seal 3D includes the through-hole 325 of the holding plate 32D.

The outer seal 2D includes the same seal section 21 and cover 23 as those of the first embodiment, and a holding plate 22D that is partially different from the holding plate 22 of the first embodiment. The holding plate 22D has cutout portions 226D engaged with the protruding pieces 326D of the inner seal 3D at the edges thereof, instead of the through-holes 226 of the holding plate 22 of the first embodiment. The cutout portion 226D is formed with a concave portion 226f that engages the hook portion 326f of the protruding piece 326D.. The outer seal 2D is assembled by the same method as the outer seal 2 of the first embodiment, and is able to be handled as one part. The through-hole 25 of the outer seal 2D includes the through-hole 225 of the holding plate 22D and the through-hole 235 of the cover.

When the side seal 1D of this embodiment is assembled, the seal section 31 is first held by the holding plate 32D of the inner seal 3D by the same method as the inner seal 3 of the first embodiment. FIG. 16B illustrates this state The outer seal 2D is assembled by the same method as the outer seal 2 of the first embodiment, and is brought into a state illustrated in FIG. 16A.

Next, the protruding piece 326D of the inner seal 3D is engaged with the cutout portion 226D of the outer seal 2D. FIG. 16C illustrates this state. In this state, gaps S1 and S2 are present in both directions of the direction perpendicular to the direction of linear motion and the direction of linear motion between the inner seal 3D and the outer seal 2 due to a dimensional difference between the protruding piece 326D and the cutout portion 226D. Additionally, the projection 328 of the inner seal 3 is inserted into the concave portion provided in the lateral portion 22b of the holding plate 22D of the outer seal 2D, similar to the side seal 1 of the first embodiment. The fitting between this concave portion and the projection 328 is also gap fitting in both directions of the direction perpendicular to the direction of linear motion and the direction of linear motion.

In this way, the side seal 1D of this embodiment has the outer seal 2D and the inner seal 3D that independently have the lip portions 21 and 31, and since the above-described gaps are present in both the direction of linear motion and the direction perpendicular to the direction of linear motion, the outer seal 2D and the inner seal 3D are coupled together so as to be relatively movable in both directions. Also, the side seal 1 is able to be handled as one part in which the outer seal 2D and the inner seal 3D are integrated.

Therefore, in the side seal 1D of this embodiment, the same effects as the side seal 1 of the first embodiment are obtained. Additionally, since the coupled state between the outer seal 2D and the inner seal 3D is able to be confirmed from the outside by the outer seal 2D and the inner seal 3D being coupled together by the engagement between the protruding piece 326D and the cutout portion 226D, there is also an effect that poor assembling is able to be reliably prevented.

The side seal 1D of this embodiment is a side seal for the linear guide of one aspect of the invention, and has the above configurations (3) and (5) The protruding piece 326D of the inner seal 3D is equivalent to the convex portion of the above configuration (3), and the cutout portion 226D of the outer seal 2D is equivalent to the concave portion of the above configuration (3). Additionally, the protruding piece 326D of the inner seal 3D is equivalent to the protruding piece of the above configuration (5), and the cutout portion 226D of the outer seal 2D is equivalent to the cutout portion of the above configuration (5).

### [Third Embodiment]

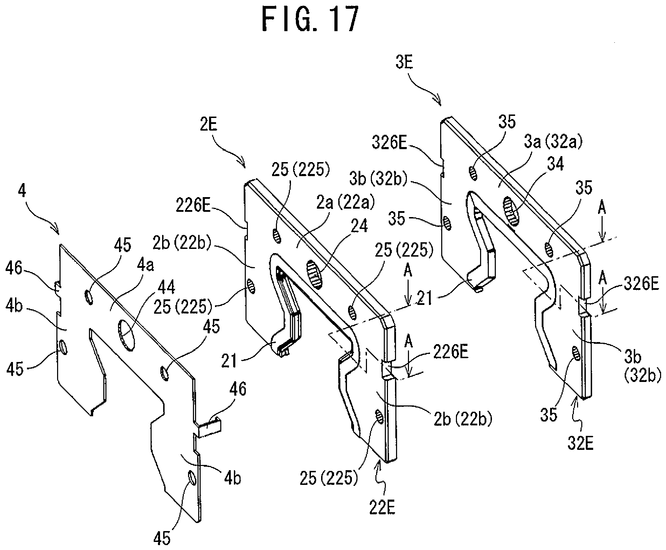

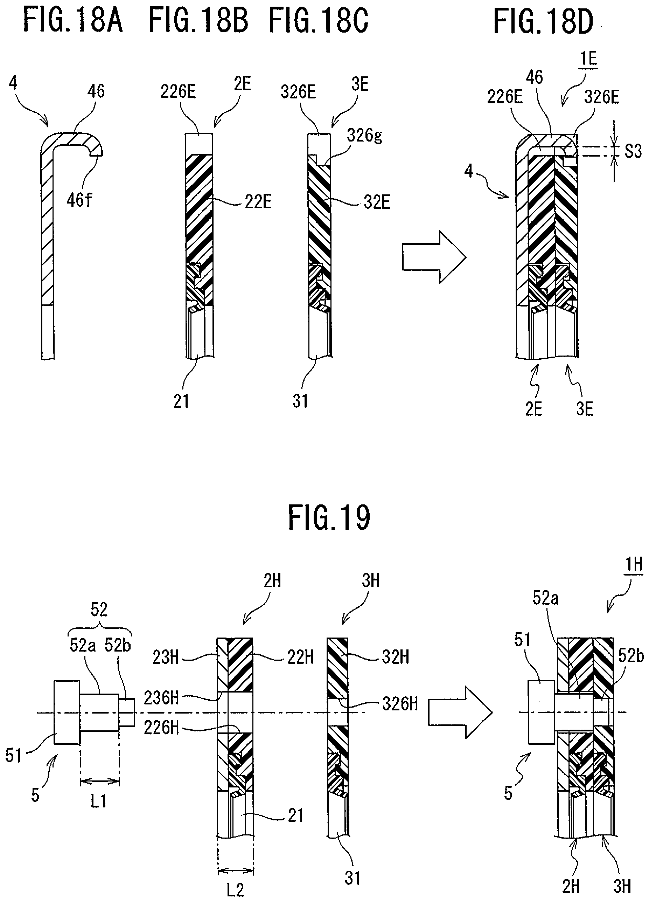

As illustrated in FIGS. 17 and 18A to 18D, a side seal 1E of this embodiment is constituted of an outer seal 2E, an inner seal 3E, and a cover 4. Similar to the side seal 1 of the first embodiment, the side seal 1E of this embodiment is fixed to the slider body 201 together with the end cap 202 with the four bolts 500 with the inner seal 3E being directed to the end cap 202 side (refer to FIG. 1). Through-holes 25, 35, and 45 for that purpose are formed in upper portions 2a, 3a, and 4a and lateral portions 2b, 3b, and 4b of the outer seal 2E, the inner seal 3E, and the cover 4.

The cover 4 is different from the cover 23 constituting the outer seal 2 of the side seal 1 of the first embodiment with respect to the following, and is the same as the cover 23 in the other aspects, The cover 4 has the protruding pieces 46, instead of the through-holes 237 of the cover 23. The protruding piece 46 protrudes in the direction of linear motion from an edge portion of the lateral portion 4b of the cover 4, and the tip thereof is formed with a hook portion 46f that is roundly bent inward in the orientation orthogonal to the direction of linear motion..

The inner seal 3E includes the same seal section 31 as that of the first embodiment, and a holding plate 32E that is partially different from the holding plate 32 of the first embodiment. The holding plate 32E has cutout portions 326E engaged with the protruding pieces 46 of the cover 4 at the edges thereof, instead of the columnar projection 326 of the holding plate 32 of the first embodiment. The cutout portion 326E is formed with a concave portion 326g that engages the hook portion 46f. The through-hole 35 of the inner seal 3E includes the through-hole 325 of the holding plate 32E.

The outer seal 2E includes the same seal section 21 as that of the first embodiment, and a holding plate 22E that is partially different from the holding plate 22 of the first embodiment The holding plate 22E has cutout portions 226E engaged with the protruding pieces 46 of the cover 4 at the edges thereof, instead of the through-holes 226 of the holding plate 22 of the first embodiment. The through-hole 25 of the outer seal 2E includes the through-hole 225 of the holding plate 22E.

When the side seal 1E of this embodiment is assembled, the seal section 31 is first held by the holding plate 32E of the inner seal 3E by the same method as the inner seal 3 of the first embodiment. FIG. 18C illustrates this state. Additionally, the seal section 21 is held by the holding plate 22E of the outer seal 2E by the same method. FIG. 18B illustrates this state.

Next, the outer seal 2E and the inner seal 3E are covered with the cover 4 from the outer seal 2E side in an overlapping state, the protruding piece 46 of the cover 4 is engaged with the cutout portions 226E and 326E of the outer seal 2E and the inner seal 3E, and the hook portion 46 is engaged with the concave portion 326g. FIG. 18D illustrates this state. In this state, a gap S3 is present in the direction perpendicular to the direction of linear motion due to a dimensional difference between the protruding piece 46 and the cutout portions 226E and 326E.

In this way, the side seal 1E of this embodiment has the outer seal 2E and the inner seal 3E that independently have the lip portions 21 and 31, and since the above-described gap is present in the direction perpendicular to the direction of linear motion, the outer seal 2E and the inner seal 3E are coupled together so as to be relatively movable in this direction, Also, the side seal 1E is able to be handled as one part in which the outer seal 2E, the inner seal 3E, and the cover 4 are integrated.

Therefore, in the side seal 1E of this embodiment, the same effects as the side seal 1 of the first embodiment are obtained. Additionally, since the coupled state between the outer seal 2E and the inner seal 3E is able to be confirmed from the outside by the outer seal 2E and the inner seal 3E being coupled together by the engagement between the protruding pieces 46 of the cover 4 and the cutout portions 226E and 326E, there is also an effect that poor assembling is able to be reliably prevented.

Moreover, in the side seal 1E of this embodiment, the protruding pieces 46 are formed in the cover 4. Therefore, the protruding pieces 46 are easily able to be manufactured integrally with the cover 4 by press working of a metal plate. Hence, the manufacturing cost of the side seal 1E of the embodiment is able to be further reduced than the side seal 1D of the second embodiment in which the protruding pieces 326D are formed in the inner seal 3D.

The side seal 1E of this embodiment is a side seal for the linear guide of one aspect of the invention, and has the above configurations (6) and (8). The cover 4 is equivalent to the coupling part of the above configuration (6), and the cutout portion 226E of the outer seal 2E and the cutout portion 226E of the inner seal 3E are equivalent to the engaged portion of the above configuration (6). Additionally, the protruding piece 46 of the cover 4 is equivalent to the protruding piece of the above configuration (8), and the cutout portion 226E of the outer seal 2E and the cutout portion 226E of the inner seal 3E are equivalent to the cutout portion of the above configuration (8).

### [Fourth Embodiment]

As illustrated in FIG. 19, a side seal 1H of this embodiment is provided by an outer seal 2H and an inner seal 3H being coupled together by pins 5 in the upper portion arranged on the upper side of the guide rail. The pin 5 has a head portion 51 and a shaft portion 52, and the shaft portion 52 includes a larger-diameter portion 52a on the head portion side and a smaller-diameter portion 52b on the tip. The materials of the pin 5 include metal or synthetic resin.

The inner seal 3H includes the same seal section 31 as that of the first embodiment, and a holding plate 32H that is partially different from the holding plate 32 of the first embodiment. The holding plate 32H has through-holes 326H, instead of the projections 326 of the holding plate 32 of the first embodiment. The diameter of the through-hole 326H is slightly (for example, about 0.02 mm to about 0.10 mm) smaller than the diameter of the smaller-diameter portion 52b of the pin 5.

The outer seal 2H includes the same seal section 21 as the first embodiment, and a holding plate 22H and a cover 23H that are partially different from the holding plate 22 and the cover 23 of the first embodiment.. The holding plate 22H has through-holes 226H, instead of the through-holes 226 of the holding plate 22 of the first embodiment.

The cover 23H has the through-hole 236H at the same positions as the through-hole 226H of the holding plate 22H. The diameters of both the through-holes 226H and 236H are the same, and are (for example, about 0.2 mm to about 2.0 mm) larger than the larger-diameter portion 52a of the shaft portion 52 of the pin 5. The length L1 of the larger-diameter portion 52a of the pin 5 is (for example, about 0,02 mm to about 0 5 mm) larger than the thickness direction total dimension L2 of the holding plate 22H and the cover 23H.

When the side seal 1H of this embodiment is assembled, first, the outer seal 2H is coupled with one part in which the seal section 21, the holding plate 22H, and the cover 23H are integrated, similar to the outer seal 2 that constitutes the side seal 1 of the first embodiment Next, the outer seal 2H and the inner seal 3H are overlapped with each other, the pins 5 are inserted into the through-hole 236H of the cover 23H of the outer seal 2H, and the smaller-diameter portion 52b at the tip is inserted into the through-hole 326H of the inner seal 2H, and is brought into a light interference fitting state.

In this state, a gap is present in the direction perpendicular to the direction of linear motion between the outer seal 2H and the larger-diameter portion 52a of the pin 5. Additionally, a gap in the direction of linear motion is present between the head portion 51 of the pin 5, and the cover 23H.

In this way, the side seal 1H of this embodiment has the outer seal 2H and the inner seal 3H that independently have the lip portions 21 and 31, and the outer seal 2H and the inner seal 3H are coupled together so as to be relatively movable in both the direction of linear motion and the direction perpendicular to the direction of linear motion. Also, the side seal 1 is able to be handled as one part in which the outer seal 2H and the inner seal 3H are integrated.

Therefore, in addition to the same effects as the side seal 1 of the first embodiment, there is an effect that the manufacturing cost of the side seal 1H of this embodiment is able to be further reduced than that of the side seal 1 of the first embodiment in which the projections 326 are provided integrally with the inner seal 3.

The side seal 1H of this embodiment is a side seal for the linear guide of one aspect of the invention, and has the above configurations (6) and (7). The pin 5 is equivalent to the coupling part of the above configuration (6), and the through-holes 226H and 236H of the outer seal 2H and the through-hole 326H of the inner seal 3H are equivalent to the engaged portion of the above configuration (6). Additionally, the pin 5 is equivalent to the pin of the above configuration (7), and the through-holes 226H and 236H of the outer seal 2 and the through-hole 326H of the inner seal 3H are equivalent to the through-hole of the above configuration (8).

In addition, if an external thread is formed in the smaller-diameter portion 52b of the shaft portion 52 of the pin 5 and an internal thread screwed to the external thread is formed in the through-hole 326H of the inner seal 3, the inner seal 3H and the outer seal 2H are able to be more reliably fixed by the screwing of the external thread and the internal thread.

### [Fifth Embodiment]

As illustrated in FIG. 20, a side seal 1K of this embodiment is provided by an outer seal 2K, an inner seal 3K, and an intermediate seal 6 being coupled together by split pins 7 in the upper portion arranged on the upper side of the guide rail.. The split pin 7 has a head portion 71 and a shaft portion 72, a slit 72a is formed in the shaft portion 72, and a hook portion 72b is formed at the tip of the shaft portion 72.. The materials of the split pin 7 include metal or synthetic resin.

The inner seal 3K includes the same seal section 31 as that of the first embodiment, and a holding plate 32K that is partially different from the holding plate 32 of the first embodiment The holding plate 32K has through-holes 326K, instead of the projections 326 of the holding plate 32 of the first embodiment. The diameter of the through-hole 326K is (for example, about 0.2 mm to about 2.0 mm) larger than the diameter of the shaft portion 72 of the split pin 7.

The outer seal 2K includes the same seal section 21 as the first embodiment, and a holding plate 22K and a cover 23K that are partially different from the holding plate 22 and the cover 23 of the first embodiment. The holding plate 22K has through-holes 226K, instead of the through-holes 226 of the holding plate 22 of the first embodiment.

The cover 23K has the through-holes 236K at the same positions as the through-holes 226K of the holding plate 22K. The diameters of both the through-holes 226K and 236K are the same, and are (for example, about 0.2 mm to about 2 0 mm) larger than the larger-diameter portion 72a of the shaft portion 72 of the split pin 7.

The intermediate seal 6 includes the same seal section 61 as the seal section 21 that constitutes the outer seal 2 of the first embodiment, and the same holding plate 62 as the holding plate 22K of the outer seal 2K. That is, the holding plate 62 of the intermediate seal 6 has the same through-hole 626K as the through-hole 226K of the holding plate 22K of the outer seal 2K.

The length of the shaft portion 72 of the split pin 7 up to before the hook portion 72b is (for example, about 0.02 mm to about 0.7 mm) larger than the thickness direction total dimension of the outer seal 2K, the intermediate seal 6, and the inner seal 3K.

When the side seal 1K of this embodiment is assembled, first, the outer seal 2K is coupled with one part in which the seal section 21, the holding plate 22K, and the cover 23K are integrated, similar to the outer seal 2 that constitutes the side seal 1 of the first embodiment.

Next, the intermediate seal 6 and the inner seal 3K are arranged on the holding plate 22K side of the outer seal 2K, the split pin 7 is inserted from the through-hole 236K of the cover 23K of the outer seal 2K, and the hook portion 72b is taken out of the inner seal 3K through the through-hole 226K of the holding plate 22K, the through-hole 626K of the intermediate seal 6, and the through-hole 326K of the inner seal 3K.

In this state, a gap in the direction perpendicular to the direction of linear motion and a gap between the direction of linear motion are present between the through-holes 236K and 226K of the outer seal 2K, the through-hole 626K of the intermediate seal 6 and the through-hole 236K of the inner seal 3K, and the shaft portion 72 of the split pin 7.

In this way, the side seal 1K of this embodiment has the outer seal 2K, the intermediate seal 6, and the inner seal 3K that independently have the lip portions 21, 61, and 31, and the outer seal 2K, the intermediate seal 6, and the inner seal 3K are coupled together so as to be relatively movable in both directions of the direction of linear motion and the direction perpendicular to the direction of linear motion. Also, the side seal 1E is able to be handled as one part in which the outer seal 2K, the intermediate seal 6, and the inner seal 3K are integrated.

Therefore, in addition to the same effects as the side seal 1 of the first embodiment, there is an effect that the manufacturing cost of the side seal 1K of this embodiment is able to be further reduced than that of the side seal 1 of the first embodiment in which the projections 326 are provided integrally with the inner seal 3. Additionally, by using split pins having different lengths, it is possible to easily cope with side seals having a different number of seal members..

In addition, in the side seal 1K of this embodiment, the hook portion 72b protrudes from the end surface of the inner seal 3K. Therefore, as illustrated by a two-dot chain line in FIG.. 20, it is necessary to provide a concave portion 202c that houses the hook portion 72b in the end cap 202.

The side seal 1K of this embodiment is a side seal for the linear guide of one aspect of the invention, and has the above configurations (6) and (7).

The split pin 7 is equivalent to the coupling part of the above configuration (6), and the through-holes 226K and 236K of the outer seal 2K, the through-hole 326K of the inner seal 3K, and the through-hole 626K of the intermediate seal 6K are equivalent to the engaged portion of the above configurations (6). Additionally, the split pin 7 is equivalent to the pin of the above configuration (7), and the through-holes 226K and 236K of the outer seal 2K, the through-hole 326K of the inner seal 3K, and the through-hole 626K of the intermediate seal 6K are equivalent to the through-hole of the above configurations (8).

In addition, although the inner seal, the outer seal, and the intermediate seal that constitute the side seal of each of the embodiments have a structure in which each seal is able to be separated into at least the seal section and the holding plate, respectively, the seal member that constitutes the side seal of the invention may be a related-art seal in which a base portion of a seal section made of elastic materials, such as nitrile rubber, acrylic rubber, silicone rubber, and fluoxorubber, is fixed to a metallic holding plate.

### Reference Signs List

1: SIDE SEAL
1a: UPPER PORTION OF SIDE SEAL
1b: LATERAL PORTION OF SIDE SEAL
1c: CORNER PORTION OF SIDE SEAL
15: THROUGH-HOLE OF SIDE SEAL
2: OUTER SEAL
2a: UPPER PORTION OF OUTER SEAL
2b: LATERAL PORTION OF OUTER SEAL
2c: CORNER PORTION OF OUTER SEAL
21: SEAL SECTION OF OUTER SEAL
22: HOLDING PLATE OF OUTER SEAL
23: COVER OF OUTER SEAL
25: THROUGH-HOLE OF OUTER SEAL
226: THROUGH-HOLE (CONCAVE PORTION) OF OUTER SEAL
226D: CUTOUT PORTION (CONCAVE PORTION) OF OUTER SEAL
226E: CUTOUT PORTION (ENGAGED PORTION) OF OUTER SEAL
226H: THROUGH-HOLE (ENGAGED PORTION) OF OUTER SEAL
226K: THROUGH-HOLE (ENGAGED PORTION) OF OUTER SEAL
236H: THROUGH-HOLE (ENGAGED PORTION) OF OUTER SEAL
236K: THROUGH-HOLE (ENGAGED PORTION) OF OUTER SEAL
3: INNER SEAL
3a: UPPER PORTION OF INNER SEAL
3b: LATERAL PORTION OF INNER SEAL
3c: CORNER PORTION OF INNER SEAL
31: SEAL SECTION OF INNER SEAL
32: HOLDING PLATE OF INNER SEAL
35: THROUGH-HOLE OF INNER SEAL
326: PROJECTION (CONVEX PORTION) OF INNER SEAL
326a: HOOK PORTION (CONVEX PORTION) OF PROJECTION
326D: PROTRUDING PIECE (CONCAVE PORTION) OF INNER SEAL
326E: CUTOUT PORTION (ENGAGED PORTION) OF INNER SEAL
326H: THROUGH-HOLE (ENGAGED PORTION) OF INNER SEAL
326K: THROUGH-HOLE (ENGAGED PORTION) OF INNER SEAL
326f: HOOK PORTION OF PROTRUDING PIECE
4: COVER (COUPLING PART)
46: PROTRUDING PIECE OF COVER
46f: HOOK PORTION OF PROTRUDING PIECE
5: PIN (COUPLING PART)
6: INTERMEDIATE SEAL
626K: THROUGH-HOLE (ENGAGED PORTION) OF INTERMEDIATE SEAL
7: SPLIT PIN (COUPLING PART)
72b: HOOK PORTION (PROTRUDING PORTION) OF SPLIT PIN
100: GUIDE RAIL
110: ROLLING CONTACT SURFACE OF GUIDE RAIL
200: SLIDER
201: SLIDER BODY
202: END CAP
202c: CONCAVE PORTION OF END CAP
203: SIDE SEAL
204: RETURN PASSAGE
205: DIRECTION CHANGE PATH
206: INTERNAL THREAD
210: ROLLING CONTACT SURFACE OF SLIDER
300: ROLLER (ROLLING ELEMENTS)
400: GREASE NIPPLE
500: BOLT

## Claims

1. A side seal (1) for a linear guide,
wherein the linear guide includes a guide rail (100), a slider (200), and a plurality of rolling elements (300),
wherein the guide rail (100) and the slider (200) have rolling contact surfaces (110, 210) that are arranged to face each other and form rolling passages for the rolling elements (300),
wherein the side seal (1) is fixed to both ends in a direction of linear motion of the slider (200),
wherein either the guide rail (100) or the slider (200) makes a linear motion relative to the other as the rolling elements (300) roll in the rolling passages,
wherein the side seal (1) seals a portion between the slider (200) and an upper surface and both side surfaces of the guide rail (100) by a lip portion,
wherein the side seal (1) includes a plurality of seal members each having the lip portion independently,
**characterized in that** the plurality of seal members are coupled together by a convex portion and a concave portion that are engaged with each other, and the convex portion and the concave portion are formed integrally with the respective seal members, and the concave portion is a cutout portion (226D) that is formed at an edge portion of the seal member, and the convex portion is a protruding piece (326D) that protrudes in the direction of linear motion and is engaged with the cutout portion (226D), and
that the protruding piece (326D) of the inner seal (3) is engaged with the cutout portion (226D), and gaps are present in both directions of linear motion and the direction perpendicular to the direction of linear motion so that the plurality of seal members are coupled together so as to be relatively movable in a direction perpendicular to the direction of linear motion.

2. The side seal (1) for a linear guide according to Claim 1, wherein the convex portion is a projection (326) that is formed on a plate surface of the seal member and that protrudes in the direction of linear motion, and the concave portion is a hole (226) into which the projection is inserted.

3. The side seal (1) for a linear guide according to Claim 2, wherein the projection (326) is not exposed from a seal member arranged on the outermost side.

4. The side seal (1) for a linear guide according to Claim 1, further comprising:
a coupling part that is separated from the plurality of seal members,
wherein the plurality of seal members have an engaged portion that is engaged with the coupling part.

5. The side sea! (1) for a linear guide according to Claim 4, wherein the coupling part is a pin (5, 7), and the engaged portion is a through-hole.

6. The side seal (1) for a linear guide according to Claim 4, wherein the engaged portion is a cutout portion that is formed at an edge portion of the seal member, and the coupling part has a protruding piece that protrudes in the direction of linear motion and is engaged with the cutout portion.

7. A linear guide comprising:
a guide rail (100), a slider (200), and a plurality of rolling elements (300),
wherein the guide rail (100) and the slider (200) have rolling contact surfaces that are arranged to face each other and form rolling passages for the rolling elements (300),
wherein either the guide rail (100) or the slider (200) makes a linear motion relative to the other as the rolling elements (300) roll in the rolling passages, and
wherein the side seal (1) according to any one of Claims 1 to 6 is fixed to both ends in a direction of linear motion of the slider (200).

8. A linear guide comprising:
a guide rail (100), a slider (200), and a plurality of rolling elements (300),
wherein the guide rail (100) and the slider (200) have rolling contact surfaces that are arranged to face each other and form rolling passages for the rolling elements (300),
wherein either the guide rail (100) or the slider (200) makes a linear motion relative to the other as the rolling elements (300) roll in the rolling passages,
wherein the side seal (1) according to Claim 5 is fixed to both ends in a direction of linear motion of the slider (200),
wherein a tip of the pin (5, 7) has a protruding portion that protrudes from the surface of the side seal (1) on the slider side, and
wherein the protruding portion is arranged in a concave portion provided in the end cap (202).

## Patentansprüche

1. Seitendichtung (1) für eine Linearführung,
wobei die Linearführung eine Führungsschiene (100), einen Schieber (200) und eine Vielzahl von Wälzelementen (300) enthält,
wobei die Führungsschiene (100) und der Schieber (200) Wälzkontaktoberflächen (110, 210) aufweisen, die einander zugewandt angeordnet sind und Wälzkanäle für die Wälzkörper (300) bilden,
wobei die Seitenabdichtung (1) an beiden Enden in einer Richtung der Linearbewegung des Schiebers (200) befestigt ist,
wobei entweder die Führungsschiene (100) oder der Schieber (200) eine lineare Bewegung relativ zu dem anderen ausführt, wenn die Wälzelemente (300) in den Wälzkanälen rollen,
wobei die Seitenabdichtung (1) einen Abschnitt zwischen dem Schieber (200) und einer oberen Oberfläche und beiden seitlichen Oberflächen der Führungsschiene (100) durch einen Lippenabschnitt abdichtet,
wobei die Seitenabdichtung (1) mehrere Dichtungselemente enthält, die den Lippenabschnitt alle unabhängig aufweisen,
**dadurch gekennzeichnet dass**
die Vielzahl von Dichtelementen durch einen konvexen Abschnitt und einen konkaven Abschnitt miteinander verbunden sind, die miteinander in Eingriff stehen, und der konvexe Abschnitt und der konkave Abschnitt integral mit den jeweiligen Dichtungselementen ausgebildet sind, und
der konkave Abschnitt ein ausgeschnittener Abschnitt (226D) ist, der an einem Randabschnitt des Dichtungselements ausgebildet ist, und der konvexe Abschnitt ein vorstehender Abschnitt (326D) ist, der in der Richtung einer linearen Bewegung vorsteht und mit dem ausgeschnittenem Abschnitt (226D) in Eingriff steht, und
dass der vorstehende Abschnitt (326D) der inneren Dichtung (3) mit dem ausgeschnittenen Abschnitt (226D) in Eingriff ist und Spalte in beiden Richtungen einer linearen Bewegung und in der Richtung senkrecht zu der Richtung der linearen Bewegung vorhanden sind, so dass die Mehrzahl Dichtungselementen miteinander gekoppelt sind, um in einer Richtung senkrecht zu der Richtung der linearen Bewegung relativ beweglich zu sein.

2. Seitendichtung (1) für eine Linearführung nach Anspruch 1,
wobei der konvexe Abschnitt ein Vorsprung (326) ist, der auf einer Plattenoberfläche des Dichtungselements ausgebildet ist und der in Richtung der linearen Bewegung vorsteht, und der konkave Abschnitt eine Öffnung (226) ist, in die der Vorsprung eingesetzt ist.

3. Seitendichtung (1) für eine Linearführung nach Anspruch 2,
wobei der Vorsprung (326) nicht von einem auf der äußersten Seite angeordneten Dichtelement freigelegt ist.

4. Seitendichtung (1) für eine Linearführung nach Anspruch 1, ferner umfassend:
ein Kupplungsteil, der von der Mehrzahl von Dichtungselementen getrennt ist,
wobei die mehreren Dichtungselemente einen Eingriffsabschnitt aufweisen, der mit dem Kupplungsteil in Eingriff steht.

5. Seitendichtung (1) für eine Linearführung nach Anspruch 4,
wobei der Kupplungsteil ein Stift (5, 7) ist und der Eingriffsabschnitt eine Durchgangsöffnung ist.

6. Seitendichtung (1) für eine Linearführung nach Anspruch 4,
wobei der Eingriffsabschnitt ein Aussparungsabschnitt ist, der an einem Kantenabschnitt des Dichtungselements ausgebildet ist, und der Kupplungsteil ein vorspringendes Stück aufweist, das in der Richtung der Linearbewegung vorsteht und mit dem Aussparungsabschnitt in Eingriff steht.

7. Linearführung, umfassend:
eine Führungsschiene (100), einen Schieber (200) und eine Vielzahl von Wälzelementen (300),
wobei die Führungsschiene (100) und der Schieber (200) Wälzkontaktoberflächen aufweisen, die einander zugewandt angeordnet sind und Wälzdurchgänge für die Wälzelemente (300) bilden,
wobei entweder die Führungsschiene (100) oder der Schieber (200) eine lineare Bewegung relativ zueinander ausführt, wenn die Wälzelemente (300) in den Wälzkanälen rollen, und
wobei die Seitendichtung (1) nach einem der Ansprüche 1 bis 6 an beiden Enden in einer linearen Bewegungsrichtung des Schiebers (200) befestigt ist.

8. Linearführung umfassend:
eine Führungsschiene (100), einen Schieber (200) und eine Vielzahl von Wälzelementen (300),
wobei die Führungsschiene (100) und der Schieber (200) Wälzkontaktoberflächen aufweisen, die einander zugewandt angeordnet sind und Wälzkanäle für die Wälzelemente (300) bilden,
wobei entweder die Führungsschiene (100) oder der Schieber (200) eine lineare Bewegung relativ zu dem anderen ausführt, wenn die Wälzelemente (300) in den Wälzkanälen rollen,
wobei die Seitenabdichtung (1) nach Anspruch 5 an beiden Enden in einer Richtung der Linearbewegung des Schiebers (200) befestigt ist,
wobei eine Spitze des Stiftes (5, 7) einen vorspringenden Abschnitt aufweist, der von der Oberfläche der seitlichen Dichtung (1) auf der Schieberseite vorsteht, und
wobei der vorstehende Abschnitt in einem konkaven Abschnitt angeordnet ist, der in der Endkappe (202) vorgesehen ist.

## Revendications

1. Joint d'étanchéité latéral (1) pour un guide linéaire,
dans lequel le guide linéaire inclut un rail de guidage (100), un coulisseau (200), et une pluralité d'éléments roulants (300),
dans lequel le rail de guidage (100) et le coulisseau (200) présentent des surfaces de contact de roulement (110, 210) qui sont agencées pour se faire face l'une l'autre et former des passages de roulement pour les éléments roulants (300),
dans lequel le joint d'étanchéité latéral (1) est fixé aux deux extrémités dans une direction de mouvement linéaire du coulisseau (200),
dans lequel le rail de guidage (100) ou le coulisseau (200) réalise un mouvement linéaire par rapport à l'autre lorsque les éléments roulants (300) roulent dans les passages de roulement,
dans lequel le joint d'étanchéité latéral (1) rend étanche une partie entre le coulisseau (200) et une surface supérieure et les deux surfaces latérales du rail de guidage (100) par une partie de lèvre,
dans lequel le joint d'étanchéité latéral (1) inclut une pluralité d'éléments de joint d'étanchéité présentant chacun la partie de lèvre indépendamment,
**caractérisé en ce que**
la pluralité d'éléments de joint d'étanchéité est couplée ensemble par une partie convexe et une partie concave qui sont mises en prise l'une avec l'autre, et la partie convexe et la partie concave sont formées intégralement avec les éléments de joint d'étanchéité respectifs, et la partie concave est une partie découpée (226D) qui est formée sur une partie d'arête de l'élément de joint d'étanchéité, et la partie convexe est une pièce en saillie (326D) qui fait saillie dans la direction de mouvement linéaire et est mise en prise avec la partie découpée (226D), et
**en ce que** la pièce en saillie (326D) du joint d'étanchéité intérieur (3) est mise en prise avec la partie découpée (226D), et des fentes sont présentes dans les deux directions de mouvement linéaire et la direction perpendiculaire à la direction de mouvement linéaire de sorte que la pluralité d'éléments de joint d'étanchéité soit couplée ensemble de sorte à être relativement mobiles dans une direction perpendiculaire à la direction de mouvement linéaire.

2. Joint d'étanchéité latéral (1) pour un guide linéaire selon la revendication 1, dans lequel la partie convexe est une projection (326) qui est formée sur une surface de plaque de l'élément de joint d'étanchéité et qui fait saillie dans la direction de mouvement linéaire et la partie concave est un trou (226), dans lequel la projection est insérée.

3. Joint d'étanchéité latéral (1) pour un guide linéaire selon la revendication 2,
dans lequel la projection (326) n'est pas exposée depuis un élément de joint d'étanchéité agencé sur le côté le plus extérieur.

4. Joint d'étanchéité latéral (1) pour un guide linéaire selon la revendication 1, comprenant en outre :
une partie de couplage qui est séparée de la pluralité d'éléments de joint d'étanchéité,
dans lequel la pluralité d'éléments de joint d'étanchéité présente une partie mise en prise qui est mise en prise avec la partie de couplage.

5. Joint d'étanchéité latéral (1) pour un guide linéaire selon la revendication 4,
dans lequel la partie de couplage est une broche (5, 7) et la partie mise en prise est un trou débouchant.

6. Joint d'étanchéité latéral (1) pour un guide linéaire selon la revendication 4,
dans lequel la partie mise en prise est une partie découpée qui est formée sur une partie d'arête de l'élément de joint d'étanchéité, et la partie de couplage présente une pièce en saillie qui fait saillie dans la direction de mouvement linéaire et est mise en prise avec la partie découpée.

7. Guide linéaire comprenant :
un rail de guidage (100), un coulisseau (200) et une pluralité d'éléments roulants (300),
dans lequel le rail de guidage (100) et le coulisseau (200) présentent des surfaces de contact de roulement qui sont agencées pour se faire face l'une l'autre et former des passages de roulement pour les éléments roulants (300),
dans lequel le rail de guidage (100) ou le coulisseau (200) réalise un mouvement linéaire par rapport à l'autre lorsque les éléments roulants (300) roulent dans les passages de roulement,
et
dans lequel le joint d'étanchéité latéral (1) selon l'une quelconque des revendications 1 à 6 est fixé aux deux extrémités dans une direction de mouvement linéaire du coulisseau (200).

8. Guide linéaire comprenant :
un rail de guidage (100), un coulisseau (200) et une pluralité d'éléments roulants (300),
dans lequel le rail de guidage (100) et le coulisseau (200) présentent des surfaces de contact de roulement qui sont agencées pour se faire face l'une l'autre et former des passages de roulement pour les éléments roulants (300),
dans lequel le rail de guidage (100) ou le coulisseau (200) réalise un mouvement linéaire par rapport à l'autre lorsque les éléments roulants (300) roulent dans les passages de roulement,
dans lequel le joint d'étanchéité latéral (1) selon la revendication 5 est fixé aux deux extrémités dans une direction de mouvement linéaire du coulisseau (200),
dans lequel un bout de la broche (5, 7) présente une partie en saillie qui fait saillie de la surface du joint d'étanchéité latéral (1) sur le côté coulisseau, et
dans lequel la partie en saillie est agencée dans une partie concave prévue dans le capuchon d'extrémité (202).
